# FASCICULE DE BREVET EUROPEEN

(11) **EP 3 730 012 B1**
(45) Date de publication et mention de la délivrance du brevet: **10.04.2024**
(21) Numéro de dépôt: 20171023.3
(22) Date de dépôt: 23.04.2020
(51) Int. Cl.: A47J 37/06

(54) **PROCÉDÉ DE PRODUCTION D'UNE GAUFRE FOURRÉE À PARTIR D'UN APPAREIL DE CUISSON D'UNE PRÉPARATION ALIMENTAIRE DE TYPE GAUFRIER**
VERFAHREN ZUR HERSTELLUNG EINER GEFÜLLTEN WAFFEL MIT EINEM WAFFELMASCHINE-KOCHGERÄT
METHOD FOR PRODUCING A FILLED WAFFLE FROM A WAFFLE MAKER TYPE COOKING APPLIANCE

(30) Priorité: 26.04.2019 FR 1904481
(43) Date de publication de la demande: 28.10.2020
(73) Titulaire: SEB S.A., 69130 Ecully (FR)
(72) Inventeur: SARTOUT, Pierre, 21490 Varois et Chaignot (FR); SEURAT, Frédéric, 21490 BRETIGNY (FR)
(74) Mandataire: SEB Développement

(56) Documents cités:
- FR-A1- 3 017 512
- US-A- 1 612 747
- US-A- 1 747 832
- US-A- 2 170 153
- US-A1- 2007 029 316

## Description

### Domaine technique

La présente invention concerne un procédé de production d'une gaufre fourrée à partir d'un appareil de cuisson du type gaufrier qui permet la réalisation de préparations alimentaires du type gaufre à partir d'une pâte alimentaire.

Plus précisément, l'invention porte sur un procédé de production d'une gaufre fourrée à partir d'un appareil de cuisson qui est conçu pour la réalisation de gaufres fourrées avec une garniture alimentaire, par exemple du chocolat, de la confiture ou des morceaux de fromage, de jambon ou de poisson, voire d'autres garnitures alimentaires.

Un principal objectif de l'invention est de concevoir un procédé de production à partir d'un appareil de cuisson permettant la réalisation de gaufres fourrées, avec une cuisson optimale.

### Etat de la technique

Les appareils de cuisson du type gaufrier sont connus de l'homme du métier. De tels appareils de cuisson comprennent généralement un corps en deux parties et un dispositif de manoeuvre conçu pour articuler ces deux parties à la manière d'une pince ou d'une mâchoire afin de pouvoir les écarter l'une de l'autre dans une position ouverte ou de les rapprocher l'une contre l'autre dans une position fermée. L'appareil comprend une plaque inférieure qui est montée sur la face interne de la première partie du corps et une plaque supérieure qui est montée sur la face interne de la deuxième partie du corps. La plaque inférieure comprend une ou deux premières empreintes comportant chacune un premier fond et des premières dents en saillie par rapport au premier fond. De même, la plaque supérieure comprend une ou deux deuxièmes empreintes comportant chacune un second fond et des deuxièmes dents en saillie par rapport au second fond. La ou les premières empreintes de la plaque inférieure sont disposées en regard de la ou des deuxièmes empreintes de la plaque supérieure, dans la position fermée de l'appareil.

Sur un gaufrier traditionnel, permettant la réalisation de gaufres natures, c'est-à-dire sans ajout d'une garniture alimentaire fourrée, les premières dents ont toutes une même taille et sont réparties de manière homogène sur le premier fond de la première empreinte et, de même, les deuxièmes dents ont toutes une même taille et sont réparties de manière homogène sur le fond de la deuxième empreinte de telle sorte que dans la position fermée, les extrémités des premières dents sont respectivement en regard et légèrement espacées des extrémités des deuxièmes dents afin qu'une fine épaisseur de pâte puisse se loger dans l'espacement entre les premières dents et les deuxièmes dents durant la cuisson.

De même, certains gaufriers comprennent des reliefs de tailles et de dimensions différentes pour former différents motifs lorsque la deuxième empreinte vient en regard de la première empreinte dans la position fermée.

D'autres gaufriers comprennent un jeu de plaque inférieure et de plaque supérieure permettant la réalisation de gaufres fourrées avec de la garniture alimentaire. Pour cela, les premières empreintes sur la plaque inférieure comprennent en partie centrale des premières dents de tailles plus petites que celles disposées autour de la partie centrale, pour former un premier évidement dans cette partie centrale. De même, les deuxièmes empreintes sur la plaque supérieure comprennent en partie centrale des deuxièmes dents de tailles plus petites que celles disposées autour de la partie centrale, pour former un second évidement dans cette partie centrale. Ainsi, dans la position fermée, le premier évidement correspond avec le second évidement de sorte à former une zone de réception permettant d'y loger une garniture alimentaire. Les publications US 2 170 153 A et US 6 412 400 B1 illustrent de tels gaufriers.

Ces conceptions de gaufrier décrites dans les publications US 2 170 153 A et US 6 412 400 B1 présentent cependant pour inconvénient de brûler la garniture alimentaire du fait que ladite garniture alimentaire entre en contact avec les extrémités des dents de plus petites tailles dans les parties centrales. En effet, lors d'une cuisson d'une gaufre, le cuisinier dépose de la pâte à gaufre dans l'empreinte de la plaque disposée du côté inférieur puis dépose de la garniture alimentaire dans la partie centrale et, enfin, ferme le gaufrier pour une durée de cuisson de quelques minutes. Lors de la dépose de la garniture alimentaire dans la zone de réception, celle-ci vient en contact avec les extrémités des dents en partie centrale de cette plaque disposée du côté inférieur. En outre, lors de la fermeture de l'appareil, les extrémités des dents en partie centrale de la plaque disposée du côté supérieur peuvent également venir en contact avec la garniture alimentaire, selon l'épaisseur de cette garniture alimentaire qui peut être supérieure à l'épaisseur de la zone de réception formée entre les empreintes des deux plaques dans la position fermée.

Il est également connu des documents US1612747, US1747832 et US2007/029316 un gaufrier comprenant une plaque présentant une zone dépourvue de dents apte à recevoir une garniture alimentaire à fourrer durant la cuisson d'une préparation alimentaire.

Cependant ces documents n'expliquent pas comment obtenir une gaufre réalisée à base d'une préparation alimentaire à l'intérieur de laquelle serait fourrée une garniture alimentaire.

### Exposé de l'invention

Le procédé de production d'une gaufre fourrée à partir d'un appareil de cuisson d'une préparation alimentaire de type gaufrier, objet de l'invention, a pour objectif principal de permettre la réalisation de gaufres fourrées d'une garniture alimentaire, sans risque d'une surcuisson ou de brûler ladite garniture alimentaire.

A cet effet, l'invention concerne un procédé de production selon la revendication 1.

Bien entendu, le fond de la plaque situé entre deux dents adjacentes de la première zone ne saurait être considéré comme une deuxième zone. Une deuxième zone s'apprécie comme un espace où il aurait pu y avoir des dents identiques à celles d'une première zone mais où cependant il n'y en a pas. Grâce à cette conception de plaque, la pâte alimentaire servant à la préparation d'une gaufre est versée sur la plaque et se répartit sur tout le fond de la plaque qui aura été préalablement chauffée uniformément grâce à un système de chauffe présent sur le gaufrier, ce qui permet quasi-instantanément la formation d'une couche de pâte cuite, autrement appelée gâteau, sur la surface du fond et, de ce fait, la dépose de la garniture alimentaire sur cette couche de gâteau, dans l'espace de réception formé par l'au moins une deuxième zone, ladite couche de gâteau maintenant la garniture alimentaire à distance du fond de la plaque. Ainsi, la garniture alimentaire n'entre en contact ni avec le fond de la plaque, ni avec les dents saillantes dudit fond qui se situent dans l'au moins une première zone distincte de l'au moins une deuxième zone, ce qui évite une surcuisson de la garniture alimentaire ou bien qu'elle ne brûle par contact direct avec la plaque.

Différentes variantes de conception de la plaque sont envisageables, notamment quant à la mise en oeuvre de l'au moins une première zone pourvue de dents écartées entre elles et saillantes de la surface du fond et de l'au moins une deuxième zone dépourvue de dents et définissant ledit espace de réception de la garniture alimentaire.

Ainsi, selon une première réalisation de la plaque, les dents sont disposées en périphérie sur la surface du fond de sorte à présenter une première zone et une deuxième zone, la première zone encadrant la deuxième zone. Ainsi, un seul espace de réception de la garniture alimentaire est prévu, celui-ci étant entouré par les dents.

Selon une deuxième réalisation de la plaque, les dents sont disposées sur trois rangées réparties de manière régulière sur la surface du fond de sorte à présenter trois premières zones et deux deuxièmes zones intercalées entre lesdites trois premières zones. Ainsi, deux espaces de réception de garniture alimentaire sont prévus et intercalés entre les trois rangées de dents.

Selon une troisième réalisation de la plaque, les dents sont disposées en huit sur la surface du fond de sorte à présenter deux premières zones et deux deuxièmes zones, les premières zones encadrant respectivement les deuxièmes zones. Ainsi, deux espaces de réception de garniture alimentaire sont prévus et entourés chacun par des dents.

Ces trois modes de réalisation précités ne sont pas limitatifs, d'autres variantes étant envisageables sans sortir du cadre de l'invention.

Ainsi, le procédé peut être employé avec un jeu de plaques d'un appareil de cuisson de type gaufrier, comprenant une plaque inférieure et une plaque supérieure dont au moins l'une présente les caractéristiques précitées. Bien entendu on pourrait prévoir un jeu de plaques avec plus de deux plaques, par exemple pour la réalisation soit de gaufres natures soit de gaufres fourrées. Selon une première réalisation du jeu de plaques, lesdites deux plaques présentent les caractéristiques précitées. En d'autres termes, ces deux plaques sont identiques ou quasi-identiques, celles-ci définissant toutes les deux au moins une première zone et au moins une deuxième zone. Cela présente pour avantage d'offrir une réversibilité aux deux plaques et, ainsi, de les monter sur l'appareil de cuisson sans se soucier du sens de montage.

Selon une deuxième réalisation du jeu de plaques, la plaque inférieure présente les caractéristiques précitées faisant l'objet de l'invention. En outre, la plaque supérieure comprend un fond s'étendant selon une surface, au moins une troisième zone pourvue de dents écartées entre elles et saillantes de ladite surface et au moins une quatrième zone distincte de l'au moins une troisième zone et pourvue de dents écartées entre elles et saillantes de ladite surface. Par ailleurs, les dents de l'au moins une quatrième zone sont de tailles inférieures à celles des dents de l'au moins une troisième zone, l'au moins une troisième zone de la plaque supérieure étant destinée à venir en regard de l'au moins une première zone de la plaque inférieure et l'au moins une quatrième zone de la plaque supérieure étant destinée à venir en regard de l'au moins une deuxième zone de la plaque inférieure, lorsque lesdites plaques inférieure et supérieure sont disposées en regard durant l'utilisation de l'appareil de cuisson. Cette mise en oeuvre nécessite de positionner selon un sens défini la plaque inférieure et la plaque supérieure sur l'appareil de cuisson, la plaque inférieure étant positionnée du côté inférieur (sur la base de l'appareil) pour recevoir la pâte alimentaire et la garniture alimentaire et la plaque supérieure étant positionnée du côté supérieur (sur le couvercle de l'appareil) pour venir recouvrir la plaque inférieure et former la gaufre durant la cuisson. Les dents de tailles inférieures dans la quatrième zone permettent à la plaque supérieure de recouvrir la plaque inférieure sans venir en contact avec la garniture alimentaire disposée sous lesdites dents de tailles inférieures et à distance de celles-ci dans l'espace de réception.

Selon une troisième réalisation du jeu de plaques, la plaque inférieure présente les caractéristiques précitées objets de l'invention. En outre, la plaque supérieure comprend un fond s'étendant selon une surface et des dents saillantes de la surface et régulièrement réparties sur toute ladite surface de sorte à venir en regard de l'au moins une première zone et de l'au moins une deuxième zone de la plaque inférieure, lorsque lesdites plaques inférieure et supérieure sont disposées en regard durant l'utilisation de l'appareil de cuisson. En d'autres termes, seule la plaque inférieure comprend les caractéristiques objets de l'invention, la plaque supérieure correspondant à une plaque traditionnelle telle que celles utilisées pour la réalisation de gaufres natures.

Ces trois modes de réalisation précités du jeu de plaques ne sont pas limitatifs, d'autres variantes étant envisageables dans le cadre de l'invention.

L'appareil comprend d'autres caractéristiques comparables à celles des appareils traditionnels, notamment un dispositif de manoeuvre configuré pour rapprocher les deux plaques l'une contre l'autre dans une position fermée et écarter les deux plaques l'une de l'autre dans une position ouverte. L'appareil comprend également un dispositif de chauffe des deux plaques placées sur ledit appareil.

Selon une réalisation de l'appareil, les deux plaques sont amovibles afin de faciliter leur nettoyage et de permettre leur remplacement ou échange.

### Brève description des figures

Les caractéristiques et avantages de l'invention apparaîtront à la lecture de la description suivante s'appuyant sur des figures, parmi lesquelles :
[Fig. 1] La figure 1 montre un appareil de cuisson de type gaufrier en position ouverte, sans le jeu de plaques ;
[Fig. 2] La figure 2 montre un jeu de deux plaques selon une première réalisation des plaques ;
[Fig. 3] La figure 3 montre un jeu de deux plaques selon une deuxième réalisation des plaques ;
[Fig. 4] La figure 4 montre un jeu de deux plaques selon une troisième réalisation des plaques ;
[Fig. 5] La figure 5 montre une variante de réalisation d'une plaque constituant une plaque supérieure d'un jeu de plaque.

### Description détaillée de l'invention

Dans la suite de la description, le terme gaufrier sera utilisé pour dénommer l'appareil de cuisson 1, sauf indication dans le texte. En outre, les mêmes références seront utilisées pour désigner les caractéristiques identiques ou comparables sur les pièces et pour les diverses variantes de réalisation, sauf indication dans le texte.

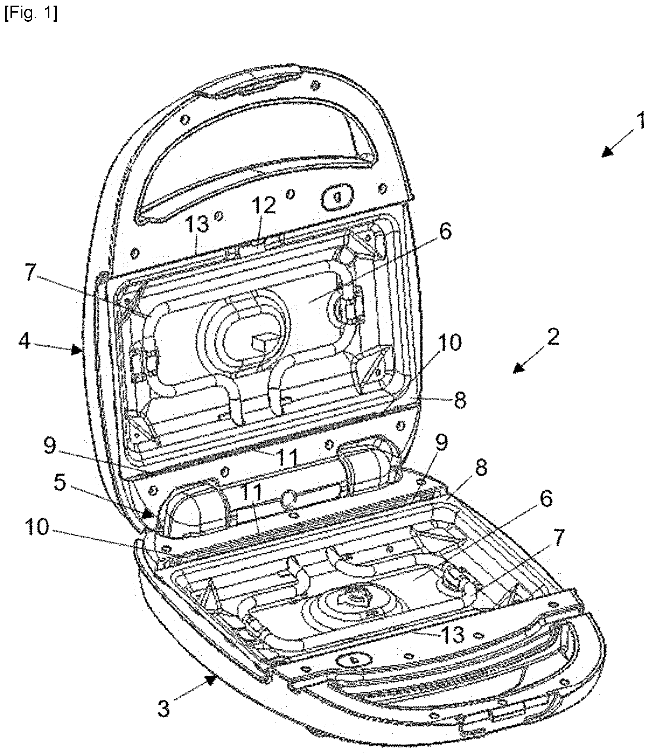

La figure 1 montre un exemple de gaufrier 1 qui présente, comme cela est déjà connu, un corps 2 en deux parties 3, 4 articulées entre elles grâce à une charnière 5 de sorte à permettre d'écarter les deux parties dans une position ouverte illustrée sur ladite figure 1 et de rapprocher ces deux parties dans une position fermée. La première partie 3 constitue une base du gaufrier 1 qui repose sur un plan de table ou de cuisine et la deuxième partie 4 constitue un couvercle venant se rabattre sur ladite base à la manière d'une pince. Chacune de ces parties 3, 4 du corps 2 comprend une cavité 6 dans laquelle est logée une résistance de chauffe 7. En outre, chacune des parties 3, 4 comprend une zone de réception 8 d'une plaque.

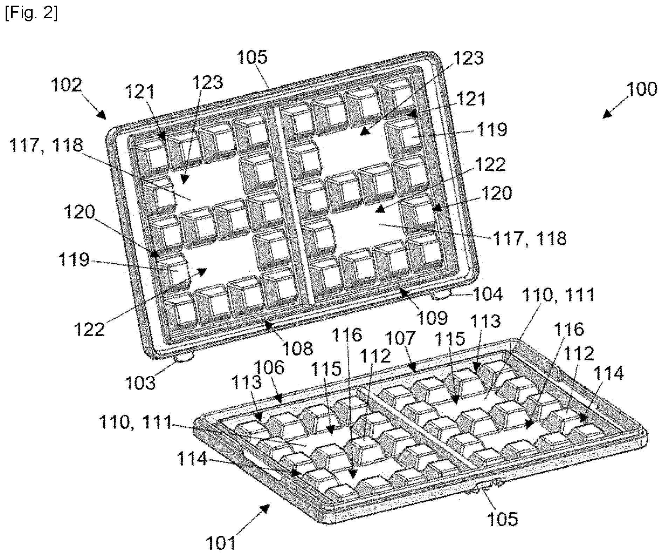

Les figures 2 à 4 illustrent trois variantes d'un jeu de plaques 100 qui comprennent chacune une plaque inférieure 101 et une plaque supérieure 102. Chacune de ces deux plaques 101, 102 comprend deux pattes 103, 104 et une encoche 105 ; les deux pattes 103, 104 s'engagent dans des logements 9, 10 respectifs sur un premier bord 11 de la zone de réception 8 de chacune des parties 3, 4 du corps 2 et l'encoche 105 s'encliquète sur une languette 12 flexible présente sur chacune des parties 3, 4 du corps 2, au niveau d'un deuxième bord 13 de ladite zone de réception 8 opposé audit premier bord 11. Ainsi, chacune des deux plaques 101, 102 peut être assemblée de manière amovible sur la zone de réception 8 de la partie 3, 4 respective du corps 2.

Sur la figure 2, la plaque inférieure 101 comprend deux premières empreintes 106, 107 identiques et, de même, la plaque supérieure 102 comprend deux deuxièmes empreintes 108, 109 identiques. Les premières empreintes 106, 107 de la plaque inférieure 101 sont en outre identiques ou quasi-identiques aux deuxièmes empreintes 108, 109 de la plaque supérieure 102. Chacune des premières empreintes 106, 107 comprend un fond 110 définissant une surface 111 plane et des dents 112 qui sont écartées entre elles et saillantes de cette surface 111 plane, lesdites dents 112 étant régulièrement réparties en formant un chiffre « huit » de manière à constituer deux premières zones 113, 114 pourvues de dents 112 qui encadrent deux deuxièmes zones 115, 116 dépourvues de dents 112 et formant des espaces de réception d'une garniture alimentaire. De même, chacune des deuxièmes empreintes 108, 109 comprend un fond 117 définissant une surface plane 118 et des dents 119 qui sont écartées entre elles et saillantes de cette surface plane 118, lesdites dents 119 étant régulièrement réparties en formant un chiffre « huit » de manière à constituer deux troisièmes zones 120, 121 pourvues de dents 119 qui encadrent deux quatrièmes zones 122, 123 dépourvues de dents 119. Ainsi, lorsque le gaufrier 1 est en position fermée, c'est-à-dire avec les deux parties 3, 4 du corps 2 rabattues l'une contre l'autre, les deux deuxièmes empreintes 108, 109 sur la plaque supérieure 102 viennent se positionner en regard des deux premières empreintes 106, 107 de la plaque inférieure 101, les troisièmes zones 120, 121 correspondant avec les premières zones 113, 114 et les quatrièmes zones 122, 123 correspondant avec les deuxièmes zones 115, 116. Les dents 112 sur les premières empreintes 106, 107 ont de préférence une taille identique aux dents 119 sur les deuxièmes empreintes 108, 109, mais on pourrait prévoir des dents 112 d'une taille différente de celle des dents 119.

Lors de la préparation d'une gaufre, le cuisinier laisse chauffer le gaufrier 1 en position fermée pour que les plaques 101, 102 montent en température. Une fois la température de cuisson atteinte, le cuisinier ouvre le gaufrier 1 dans la position illustrée en figure 1, puis dépose de la pâte à gaufre dans les fonds 110 des premières empreintes 106, 107 de la plaque inférieure 101 qui est montée sur la première partie 3 du corps 2 du gaufrier 1. Dans chaque première empreinte 106, 107, la pâte s'étale sur tout le fond 110 en se répartissant sur la surface 111 entre les dents 112 dans les premières zones 113, 114 et aussi sur cette surface 111 dans les deuxièmes zones 115, 116. Le début de cuisson de la pâte à gaufre permet de former une couche de pâte qui commence à se solidifier au contact de la surface 111 de la plaque mais en maintenant une consistance liquide au-dessus, permettant ainsi de déposer la plupart des garnitures alimentaires, par exemple un carré de chocolat, du saumon, de la confiture, du fromage ou du jambon, dans les deuxièmes zones 115, 116 sans que la garniture entre en contact avec la plaque inférieure 101. Cela permet également d'enrober la garniture avec la pâte présentant encore une consistance liquide. Par ailleurs, la garniture alimentaire est hors de portée des dents 112 situées dans les premières zones 113, 114. Bien entendu, l'homme du métier sait que si la quantité de la garniture est trop importante pour qu'elle puisse être totalement enrobée par la pâte alors la garniture risque de venir au contact avec des parties (surface 111 et dents 112) des premières empreintes 106, 107 ou des deuxièmes empreintes 108, 109. Pour une quantité appropriée de garniture, la garniture alimentaire n'a aucun contact direct avec des parties (surface 111 et dents 112) des premières empreintes 106, 107, ce qui évite une surcuisson ou de brûler ladite garniture alimentaire. Une fois la garniture alimentaire déposée dans les deuxièmes zones 115, 116, le cuisinier procède à la fermeture du gaufrier 1 en rabattant la deuxième partie 4 du corps 2, sur laquelle est montée la plaque supérieure 102, contre la première partie 3 du corps 2 ; les deuxièmes empreintes 108, 109 de la plaque supérieure 102 viennent alors en regard des premières empreintes 106, 107 respectives de la plaque inférieure 101.

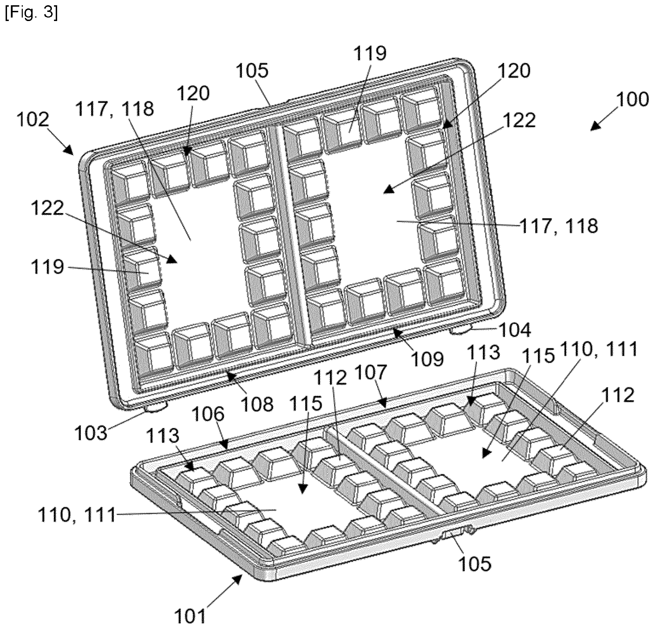

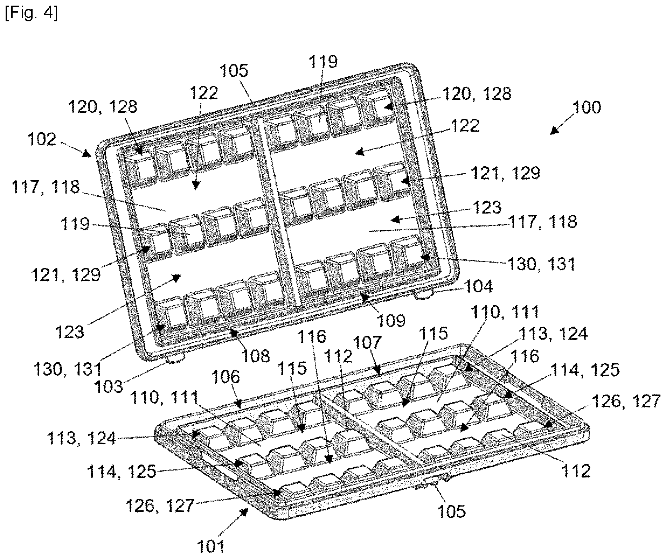

Le principe reste identique avec les variantes de jeux de plaques 100 illustrées en figure 3 et 4, seul change l'agencement des dents 112 sur les premières empreintes 106, 107 de la plaque inférieure 101 et des dents 119 sur les deuxièmes empreintes 108, 109 de la plaque supérieure 102.

Sur la figure 3, chaque première empreinte 106, 107 sur la plaque inférieure 101 comprend des dents 112 qui sont régulièrement réparties uniquement sur la périphérie de la surface 111 de manière à former une seule première zone 113 qui encadre une seule deuxième zone 115 dépourvue desdites dents 112. De même, chaque deuxième empreinte 108, 109 sur la plaque supérieure 102 comprend des dents 119 qui sont régulièrement réparties uniquement sur la périphérie de la surface 118 de manière à former une seule troisième zone 120 qui encadre une seule quatrième zone 122 dépourvue desdites dents 119.

Sur la figure 4, chaque première empreinte 106, 107 sur la plaque inférieure 101 comprend uniquement trois rangées 124, 125, 126 de dents 112 qui sont régulièrement réparties sur la surface 111 de manière à former trois premières zones 113, 114, 127 et deux deuxièmes zones 115, 116 dépourvues desdites dents 112, les deux deuxièmes zones 115, 116 étant intercalées entre les trois premières zones 113, 114, 127. De même, chaque deuxième empreinte 108, 109 sur la plaque supérieure 102 comprend uniquement trois rangées 128, 129, 130 de dents 119 qui sont régulièrement réparties sur la surface 118 de manière à former trois troisièmes zones 120, 121, 131 et deux quatrièmes zones 122, 123 dépourvues desdites dents 119, les deux quatrièmes zones 122, 123 étant intercalées entre les trois troisièmes zones 120, 121, 131.

Les deuxièmes empreintes 108, 109 de la plaque supérieure 102, qui viennent fermer respectivement les premières empreintes 106, 107 de la plaque inférieure 101 lors de la fermeture du gaufrier 1, peuvent être d'une conception différente de celle desdites premières empreinte 106, 107. Toutefois, l'avantage d'une conception identique ou quasi-identique des deux plaques 101, 102 est de disposer sur les deuxièmes empreintes 108, 109 de la plaque supérieure 102, de la présence des quatrièmes zones 122, 123 qui correspondent avec les deuxièmes zones 115, 116 sur les premières empreintes 106, 107 de la plaque inférieure 101 et forment également un espace de réception de la garniture alimentaire, ce qui permet de placer une épaisseur de garniture alimentaire plus importante sur la plaque inférieure 101 sans risque que la plaque supérieure 102 vienne en contact avec cette garniture alimentaire lors de la fermeture du gaufrier 1. Un autre avantage est de pouvoir interchanger la plaque inférieure 101 et la plaque supérieure 102 sur les parties 3, 4 du corps 2 du gaufrier 1.

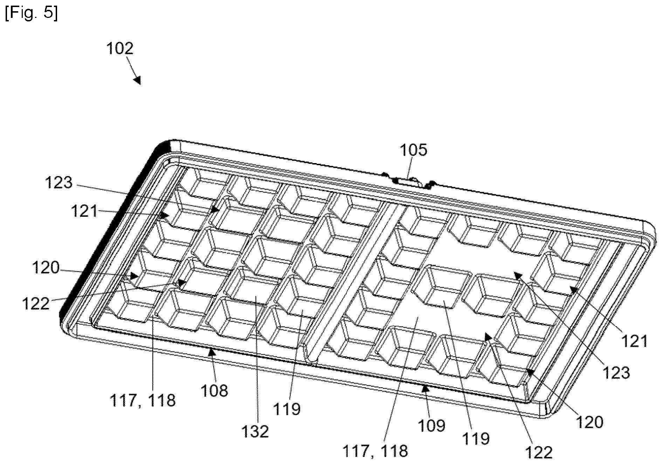

A titre d'exemple de variante de deuxièmes empreintes 108, 109 sur la plaque supérieure 102, la figure 5 montre une plaque supérieure 102 sur laquelle l'une des deuxièmes empreintes 109 correspond à celle sur la figure 2, tandis que l'autre des deuxièmes empreintes 108 présente des troisièmes zones 120, 121 identiques à celles sur la figure 2 et des quatrièmes zones 122, 123 qui sont pourvues de dents 132 dont la taille est inférieure à celle des dents 119 sur lesdites troisièmes zones 120, 121. Bien entendu, les deux deuxièmes empreintes 108, 109 pourraient être identiques et comporter chacune de telles dents 132 dans les quatrièmes zones 122, 123. Selon une autre variante envisageable, non illustrée, les deuxièmes empreintes 108, 109 sur la plaque supérieure 102 pourraient être d'une conception traditionnelle, c'est-à-dire avec des dents identiques régulièrement réparties sur toute la surface 118 du fond 117, tel que les plaques servant à la réalisation de gaufre nature. Ces diverses variantes nécessitent toutefois de réduire l'épaisseur de la quantité de garniture alimentaire déposée dans les deuxièmes zones 115, 116 de la plaque inférieure 101, afin d'éviter le contact de la garniture alimentaire avec la plaque supérieure 102 lors de la fermeture du gaufrier 1.

Des variantes de conception sont envisageables dans le cadre de l'invention. Sur les figures 2 à 4, la plaque inférieure 101 comprend deux premières empreinte 106, 107 et la plaque supérieure 102 comprend deux deuxièmes empreintes 108, 109. On pourrait prévoir une seule première empreinte 106 sur la plaque inférieure 101 et une seule deuxième empreinte 108 sur la plaque supérieure 102. Au contraire, on pourrait prévoir plus de deux premières empreintes 106, 107 sur la plaque inférieure 101 et autant de deuxièmes empreintes 108, 109 sur la plaque supérieure 102.

Les plaques 101, 102 sont de préférence réalisées en aluminium par moulage, puis revêtues d'une matière polytétrafluoroéthylène (PTFE). D'autres modes de réalisation restent toutefois envisageables sans sortir du cadre de l'invention. Par exemple, il est possible d'intégrer des reliefs décoratifs dans les deuxièmes zones 115, 116 dépourvues de dents. Ces reliefs décoratifs présentent une hauteur négligeable en comparaison des dents 112 de la plaque, typiquement ces reliefs décoratifs n'excèdent pas 1 mm de hauteur.

De plus, une répartition irrégulière des dents est également envisageable.

Par ailleurs, il est possible de concevoir un appareil de cuisson avec des plaques fixes dans lesquelles les résistances de chauffage sont généralement serties sous les plaques.

## Revendications

1. Procédé de production d'une gaufre fourrée à partir d'un appareil de cuisson d'une préparation alimentaire de type gaufrier, comprenant un jeu de plaques, lequel comprend une plaque inférieure (101) et une plaque supérieure (102) ainsi qu'un dispositif de chauffe des deux plaques, dont au moins l'une plaque inférieure (101) comprend au moins un fond (110) s'étendant selon une surface (111) et au moins une première zone (113, 114, 127) pourvue de dents (112) écartées entre elles et saillantes de la surface (111), ladite plaque inférieure (101) comprenant au moins une deuxième zone (115, 116) dépourvue de dents, distincte de l'au moins une première zone (113, 114, 127), l'au moins une deuxième zone (115, 116) définissant au niveau de la surface (111) un espace de réception d'une garniture alimentaire à fourrer durant la cuisson d'une préparation alimentaire, et comprenant les étapes consistant à :
- verser la pâte liquide sur la plaque inférieure (101),
- déposer la garniture alimentaire sur la pâte encore liquide recouvrant l'au moins une deuxième zone (115, 116) de la plaque inférieure (101) dépourvue de dents,
- amener la plaque supérieure (102) en regard de la plaque inférieure (101),
- poursuivre la cuisson de la pâte jusqu'à ce que la pâte soit totalement cuite.

2. Procédé selon la revendication 1, dans lequel les dents (112) sont disposées en périphérie sur la surface (111) du fond (110) de sorte à présenter une première zone (113) et une deuxième zone (115), la première zone (113) encadrant la deuxième zone (115)

3. Procédé selon la revendication 1, dans lequel les dents (112) sont disposées sur trois rangées (124, 125, 126) réparties de manière régulière sur la surface (111) du fond (110) de sorte à présenter trois premières zones (113, 114, 127) et deux deuxièmes zones (115, 116) intercalées entre lesdites trois premières zones (113, 114, 127).

4. Procédé selon la revendication 1, dans lequel les dents (112) sont disposées en huit sur la surface (111) du fond (110) de sorte à présenter deux premières zones (113, 114) et deux deuxièmes zones (115, 116), les premières zones encadrant respectivement les deuxièmes zones.

5. Procédé selon l'une des revendications 1 à 4, dans lequel les deux plaques (101, 102) du jeu de plaques présentent les caractéristiques de la revendication 1.

6. Procédé selon la revendication 5, dans lequel la plaque inférieure (101) présente les caractéristiques de l'une quelconque des revendications 1 à 4 et la plaque supérieure (102) comprend un fond (117) s'étendant selon une surface (118), au moins une troisième zone (120, 121, 131) pourvue de dents (119) écartées entre elles et saillantes de ladite surface (118) et au moins une quatrième zone (122, 123) distincte de l'au moins une troisième zone (120, 121,131) et pourvue de dents (132) écartées entre elles et saillantes de ladite surface, les dents (132) de l'au moins une quatrième zone (122, 123) étant de tailles inférieures à celles des dents (119) de l'au moins une troisième zone (120, 121, 131), l'au moins une troisième zone (120, 121, 131) de la plaque supérieure (102) étant destinée à venir en regard de l'au moins une première zone (113, 114, 127) de la plaque inférieure (101) et l'au moins une quatrième zone (122, 123) de la plaque supérieure (102) étant destinée à venir en regard de l'au moins une deuxième zone (115, 116) de la plaque inférieure (101), lorsque lesdites plaques inférieure et supérieure sont disposées en regard durant l'utilisation de l'appareil de cuisson (1).

7. Procédé selon la revendication 5, dans lequel la plaque inférieure (101) présente les caractéristiques de l'une quelconque des revendications 1 à 4 et la plaque supérieure (102) comprend un fond (117) s'étendant selon une surface (118) et des dents (119) saillantes de la surface et régulièrement réparties sur toute ladite surface (118) de sorte à venir en regard de l'au moins une première zone (113, 114, 127) et de l'au moins une deuxième zone (115, 116) de la plaque inférieure (101), lorsque lesdites plaques inférieure et supérieure sont disposées en regard durant l'utilisation de l'appareil de cuisson (1).

## Patentansprüche

1. Verfahren zur Herstellung einer gefüllten Waffel mit eines Kochgeräts für eine Lebensmittelzubereitung vom Typ einer Waffelmaschine, die einen Satz Platten, der eine untere Platte (101) und eine obere Platte (102) umfasst, sowie eine Vorrichtung zum Heizen der zwei Platten umfasst, von denen mindestens die eine untere Platte (101) mindestens einen Boden (110), der sich in einer Fläche (111) erstreckt, und mindestens einen ersten Bereich (113, 114, 127) umfasst, der mit Zähnen (112) versehen ist, die voneinander beabstandet sind und von der Fläche (111) vorspringen, wobei die untere Platte (101) mindestens einen zweiten Bereich (115, 116) ohne Zähne umfasst, der sich von dem mindestens einen ersten Bereich (113, 114, 127) unterscheidet, wobei der mindestens eine zweite Bereich (115, 116) auf Höhe der Fläche (111) einen Raum zum Aufnehmen einer Lebensmittelfüllung definiert, die während des Kochens einer Lebensmittelzubereitung als Füllung eingebracht werden soll, und die folgenden Schritte umfassend, die darin bestehen:
- den flüssigen Teig auf die untere Platte (101) zu gießen,
- die Lebensmittelfüllung auf den noch flüssigen Teig zu geben, der den mindestens einen zweiten Bereich (115, 116) der unteren Platte (101) ohne Zähne bedeckt,
- die obere Platte (102) der unteren Platte (101) gegenüber zu bringen,
- das Kochen des Teiges fortzusetzen, bis der Teig vollständig gekocht ist.

2. Verfahren nach Anspruch 1, wobei die Zähne (112) am Umfang auf der Fläche (111) des Bodens (110) angeordnet sind, sodass er einen ersten Bereich (113) und einen zweiten Bereich (115) aufweist, wobei der erste Bereich (113) den zweiten Bereich (115) umrahmt.

3. Verfahren nach Anspruch 1, wobei die Zähne (112) auf drei Reihen (124, 125, 126) angeordnet sind, die gleichmäßig auf der Fläche (111) des Bodens (110) verteilt sind, sodass er drei erste Bereiche (113, 114, 127) und zwei zweite Bereiche (115, 116) aufweist, die zwischen den drei ersten Bereichen (113, 114, 127) eingefügt sind.

4. Verfahren nach Anspruch 1, wobei die Zähne (112) als Acht auf der Fläche (111) des Bodens (110) angeordnet sind, sodass er zwei erste Bereiche (113, 114) und zwei zweite Bereiche (115, 116) aufweist, wobei die ersten Bereiche jeweils die zweiten Bereiche umrahmen.

5. Verfahren nach einem der Ansprüche 1 bis 4, wobei die zwei Platten (101, 102) des Plattensatzes die Merkmale nach Anspruch 1 aufweisen.

6. Verfahren nach Anspruch 5, wobei die untere Platte (101) die Merkmale nach einem der Ansprüche 1 bis 4 aufweist, und die obere Platte (102) einen Boden (117), der sich in einer Fläche (118) erstreckt, mindestens einen dritten Bereich (120, 121, 131), der mit Zähnen (119) versehen ist, die voneinander beabstandet sind und von der Fläche (118) vorspringen, und mindestens einen vierten Bereich (122, 123) umfasst, der sich von dem mindestens einen dritten Bereich (120, 121, 131) unterscheidet und mit Zähnen (132) versehen ist, die voneinander beabstandet sind und von der Fläche vorspringen, wobei die Zähne (132) des mindestens einen vierten Bereichs (122, 123) kleinere Größen aufweisen als die der Zähne (119) des mindestens einen dritten Bereichs (120, 121, 131), wobei der mindestens eine dritte Bereich (120, 121, 131) der oberen Platte (102) dazu bestimmt ist, dem mindestens einen ersten Bereich (113, 114, 127) der unteren Platte (101) gegenüber zu kommen, und der mindestens eine vierte Bereich (122, 123) der oberen Platte (102) dazu bestimmt ist, dem mindestens einen zweiten Bereich (115, 116) der unteren Platte (101) gegenüber zu kommen, wenn die untere und die obere Platte während des Gebrauchs des Kochgeräts (1) einander gegenüberliegend angeordnet werden.

7. Verfahren nach Anspruch 5, wobei die untere Platte (101) die Merkmale nach einem der Ansprüche 1 bis 4 aufweist, und die obere Platte (102) einen Boden (117), der sich in einer Fläche (118) erstreckt, und Zähne (119) umfasst, die von der Fläche vorspringen und gleichmäßig auf der gesamten Fläche (118) verteilt sind, sodass sie dem mindestens einen ersten Bereich (113, 114, 127) und dem mindestens einen zweiten Bereich (115, 116) der unteren Platte (101) gegenüber kommen, wenn die untere und die obere Platte während des Gebrauchs des Kochgeräts (1) einander gegenüberliegend angeordnet werden.

## Claims

1. A method for producing a filled waffle using a waffle iron-type apparatus for cooking a food preparation, said apparatus comprising a set of plates which comprises a lower plate (101) and an upper plate (102) as well as a device for heating the two plates, of which at least the lower plate (101) comprises at least one base (110) extending along a surface (111) and at least one first area (113, 114, 127) provided with teeth (112) spaced apart and projecting from the surface (111), said lower plate (101) comprising at least one second area (115, 116) without teeth and separate from the at least one first area (113, 114, 127), the at least one second area (115, 116) defining at the surface (111) a space for receiving a food filling to be filled during the cooking of a food preparation, the method comprising the steps consisting of:
- pouring the liquid batter onto the lower plate (101),
- placing the food filling on the still-liquid batter covering the at least one second area (115, 116) of the lower plate (101), which has no teeth,
- bringing the upper plate (102) to face the lower plate (101),
- continuing to cook the batter until it is fully cooked.

2. The method according to claim 1, wherein the teeth (112) are arranged on the edge of the surface (111) of the base (110) so as to have a first area (113) and a second area (115), the first area (113) enclosing the second area (115).

3. The method according to claim 1, wherein the teeth (112) are arranged in three rows (124, 125, 126) distributed evenly over the surface (111) of the base (110) so as to have three first areas (113, 114, 127) and two second areas (115, 116) sandwiched between said three first areas (113, 114, 127).

4. The method according to claim 1, wherein the teeth (112) are arranged in a figure of eight on the surface (111) of the base (110) so as to have two first areas (113, 114) and two second areas (115, 116), the first areas enclosing the second areas respectively.

5. The method according to any one of claims 1 to 4, wherein the two plates (101, 102) of the set of plates have the features of claim 1.

6. The method according to claim 5, wherein the lower plate (101) has the features of any one of claims 1 to 4 and the upper plate (102) comprises a base (117) extending along a surface (118), at least one third area (120, 121, 131) provided with teeth (119) spaced apart and projecting from said surface (118) and at least one fourth area (122, 123) separate from the at least one third area (120, 121, 131) and provided with teeth (132) spaced apart and projecting from said surface, the teeth (132) of the at least one fourth area (122, 123) being smaller in size than the teeth (119) of the at least one third area (120, 121, 131), the at least one third area (120, 121, 131) of the upper plate (102) being intended to face the at least one first area (113, 114, 127) of the lower plate (101) and the at least one fourth area (122, 123) of the upper plate (102) being intended to face the at least one second area (115, 116) of the lower plate (101) when said lower and upper plates are arranged facing each other during use of the cooking apparatus (1).

7. The method according to claim 5, wherein the lower plate (101) has the features of any one of claims 1 to 4 and the upper plate (102) comprises a base (117) extending along a surface (118) and teeth (119) projecting from the surface and evenly distributed over the whole of said surface (118) so as to face the at least one first area (113, 114, 127) and the at least one second area (115, 116) of the lower plate (101) when said lower and upper plates are arranged facing each other during use of the cooking apparatus (1).
